# EUROPEAN PATENT APPLICATION

(11) **EP 1 589 598 A1**
(43) Date of publication of application: **26.10.2005**
(21) Application number: 05008411.0
(22) Date of filing: 18.04.2005
(51) Int. Cl.: H01M 4/72, C22C 11/00

(54) **High tin containing alloy for battery components**

(30) Priority: 22.04.2004 US 830500
(71) Applicant: RSR Technologies, Inc., Dallas, TX 75207 (US)
(72) Inventor: Prengaman, R.David, Arlington, Texas 76011 (US)
(74) Representative: Jones Day

(57) **Abstract**

This invention relates to lead based alloys used for lead acid battery components. The invention relates to lead antimony alloys containing a high tin content. This invention provides a lead alloy containing 2 to 3.5 weight percent antimony, 0.6 top 2.5 weight percent tin, 0.005 to 0.4 weight percent arsenic and 0.010 to 0.04 weight percent selenium. These alloys are suited for battery components, particularly battery straps and for the positive grid in a lead acid battery used by cycling service.

## Description

### CROSS-REFERENCE TO RELATED APPLICATIONS

Not applicable

### STATEMENT REGARDING FEDERALLY SPONSORED RESEARCH OR DEVELOPMENT

Not applicable

### BACKGROUND OF THE INVENTION

This invention relates to lead based alloys used for lead acid battery components. The invention relates to lead antimony alloys containing a high tin content. The alloys are particularly suited for battery straps and grids.

Lead based alloys containing antimony have been used to produce components for lead acid batteries. These alloys generally contain small amounts of arsenic, tin, and other components such as copper, sulfur, or selenium to control the grain structures of grids, straps, and terminal bushings. Peters, in US Pat. Nos. 3,912,537 and 3,912,537 describes storage battery grids which utilize copper, sulfur and selenium as nucleants to control the grain structures of the cast grids, to prevent cracking, and to reduce the transfer of antimony from the grid. Nijhawan, in US Pat. No. 3,801,310, Nijhawan et al. in US Pat. No. 3,990,893, and Ueberschaer et al. in 3,993,480 describe low antimony alloys containing less than 3.5 weight percent antimony which contain tin, arsenic, sulfur, copper, selenium and silver. Nann and Heubner in US Pat. No. 4,310,353 describe the use of selenium as an alloying element to prevent cracking in low antimony battery grid alloys. Prengaman in US Pat No. 4,376,093 describes a very low antimony alloy using primarily copper and arsenic to refine the grain structure.

Alloys for battery grids have been described in numerous technical publications. Kallup in "Selenium-an important Additive for Lead acid Batteries" Proceedings of Pb86 9^{th} Intl Lead Conference, Goslar Germany, LDAI London Oct. 1986, Heubner and Ueberschaer, in "Castability of lead Antimony Alloys in Battery grids with Particular reference to Nucleation Techniques", in Proc. of Pb74 5^{th} Intl Lead Conference, Paris, LDAI London Oct 1974, Prengaman, in "Low Antimony Alloys" in Battery Man Magazine October 1983 describe techniques to utilize selenium, copper, and sulfur in low antimony (less than 3.5 weight percent) alloys to control the structures and to prevent cracking in cast grids for lead acid batteries.

Battery grids may be held together by means of a small narrow tab or lug extending from the grid. These tabs are placed in molten lead, and thereby the spaced apart grids are cast together. This band of cast lead joining the grids is commonly called a strap. Alloys for cast on straps containing about 2.5-3.5 weight percent antimony are known. For example, Rao et al. in US Pat. No. 5,169,734 and Bantz et al. in US Pat. No. 5,508,125 describe lead antimony alloys for use as cast on straps. The alloys contain 2.5-3.5 weight percent antimony and various amounts of arsenic, tin, and selenium as alloying elements. Rao favors very low contents of tin and arsenic and sufficient selenium to produce structures in the straps which are resistant to cracking and corrosion. The straps of Rao et al. have a moderate tensile strength and also have a relatively low yield strength to produce and maintain high levels of ductility over the first several days of aging. Bantz et al. uses a complex method of evaluating the effects of antimony, arsenic, tin, and selenium contents of the alloy on tensile strength, impact strength, and corrosion behavior of battery strap alloys. They conclude that the alloy should restrict the tin to levels below 0.5 weight percent and preferably much lower. They teach that when tin is present, the deleterious effects of tin on the corrosion behavior can be moderated by higher arsenic, antimony, and selenium contents. For optimum performance, Bantz et al. restrict the tin content to 0.25 weight percent or below.

Other alloys are also used in cast on straps for lead acid batteries. In US Pat. No. 3,764,386, Mix describes a very low melting point alloy of lead, bismuth and tin to achieve acceptable bonds between grid lugs and the strap alloy. The alloy may contain 20-70 weight percent of each of the components to produce an alloy with a melting point less than 320°F. The alloy should have as much lead as possible and have a ratio of bismuth to tin of 0.8 to 1. Sealed lead acid batteries use alloys which contain 2-4 weight percent tin with or without small additions of selenium for cast on straps. The metallurgical basis for the cast on strap process as well as a description of the alloys used for the process is described by Prengaman in "New Developments in Battery Strap Alloys" The Battery Man, September 1989.

Virtually all the alloys described in these patents and papers limit the tin content of the alloy for both battery grids as well as for cast on straps to levels of less than 0.5 weight percent. In every patent or paper discussed above, the authors caution against the use of higher tin contents in the alloys.

Cast on straps are commonly connected to one another by tombstone shaped vertical tabs. The tombstones of adjacent straps are placed against the cell partition walls in a battery and are welded together through the partition.

In the welding process, which is often called extrusion fusion welding, the tombstone shaped upper parts of the positive and negative strap are simultaneously pushed or extruded through a hole in the cell wall dividing one electrochemical cell from another. Once through the hole, the strap alloys are melted by an electric current and fuse together to form an electrical path between the cells as well as a seal to prevent leakage of acid through the cell. The alloy must solidify in the weld in a uniform manner without holes or stress inducing structures.

The major mode of corrosion failure of the inter cell welds is believed to be due to the buildup of a corrosion layer on the surface of the tombstone between the cell partition wall and the adjacent tombstone face of the weld. The corrosion layer, believed to be primarily lead sulfate, builds up and acts as a wedge to force the face of the tombstone away from the face of the cell wall. The wedging action creates forces which causes cracks to propagate through the weld leading to failure of the connection.

At high under hood temperatures and in hot climates, the rate of corrosion on all parts of the battery is markedly increased. In the area of the weld zone between the cell wall and the tombstone, the lead part reacts with the available sulfuric acid to produce a lead sulfate layer on the surface of the tombstone. The reaction with the acid depletes the region of acid and the reaction product of the sulfuric acid is water. In the localized region between the tombstone face and the cell wall the concentration of acid falls and the concentration of water markedly increases.

As the concentration of water increases, the pH of the solution rises, and the lead ions become more soluble particularly at elevated temperatures. Since this area is isolated, acid cannot readily diffuse into the region to raise the acid concentration of the solution. The higher solubility of lead ions promotes rapid corrosion of the part to produce a mixed lead oxide-lead sulfate layer on the surface of the tombstone adjacent to the cell wall. As the temperature is increased the rate of reaction increases and the thickness of the corrosion film also increases. The increased thickness of the corrosion layer exerts higher and higher stresses on the tombstone. If the structure of the tombstone is subject to cracking it will fail in a manner seen in the photographs of Rao et al.

I have discovered that if the tin content is raised sufficiently, the SnO2 corrosion product forms on the surface of the metal, protects the metal, and renders it passive over a range of pH. The tin also dopes the lead oxide corrosion product, reduces the thickness of the corrosion film, and increases the conductivity of the film so that the corrosion layers developed are conductive instead of insulating. Insulating layers promote corrosion beneath the layer.

If the area had sufficient circulation of acid, the positive part of the weld would be coated with lead dioxide, while the negative region would remain without corrosion as lead. Regions with potentials below that required to form lead dioxide can rapidly form lead sulfate or mixed sulfate-oxide products. In a similar manner, the negative part of the weld raised above the protective potential can now be corroded to develop lead sulfate. The addition of sufficient tin significantly widens the potential area where stable corrosion films are developed.

I have also discovered a high tin alloy that has high ductility and toughness in the part so that when the corrosion does occur the part will bend instead of crack. This also reduces corrosion.

### BRIEF SUMMARY OF THE INVENTION

This invention provides a lead alloy containing 2 to 3.5 weight percent antimony, 0.6 top 2.5 weight percent tin, 0.005 to 0.4 weight percent arsenic and 0.010 to 0.04 weight percent selenium. These alloys are suited for battery components, particularly battery straps and for the positive grid in a lead acid battery used by cycling service.

### DETAILED DESCRIPTION OF THE INVENTION

This invention relates to a novel lead alloy containing antimony, tin, arsenic and selenium. This invention also relates to battery components, including battery straps, grids, bushings and terminals formed from this novel alloy.

The novel lead alloy of the invention contains 2.0 to 3.5 weight percent antimony, 0.6 to 2.5 weight percent tin, 0.005 to 0.4 weight percent arsenic and 0.01 to 0.04 weight percent selenium. The alloy may also contain, but is not limited to, the normal impurities found in recycled lead such as copper, silver, nickel, sulfur and bismuth. The level of materials in the alloy may vary depending on the type of battery and the operating conditions. The alloy may be used to form battery components, including battery straps and battery grids. The invention also relates to the thus formed straps and grids.

In a preferred embodiment, the novel lead alloy is used to form a novel battery strap and contains 2.5 to 3.5 weight percent antimony, more preferably 2.75 to 3.25 weight percent antimony, 0.8 to 1.5 weight percent tin, 0.05 to 0.3 weight percent arsenic, more preferably 0.10 to 0.15 weight percent arsenic, and 0.01 to 0.03 weight percent selenium, more preferably 0.015 to 0.025 weight percent selenium.

In another preferred embodiment, the novel lead alloy is used to form a novel battery grid containing 2.0 to 3.5 weight percent antimony, 0.8 to 1.5 weight percent tin, 0.005 to 0.025 weight percent arsenic and 0.015 to 0.03 weight percent selenium.

The invention is based on the discovery that lead antimony alloys used for cast on straps have generally restricted the tin content in an attempt to reduce the rate of corrosion of the intercell welds, particularly those used in batteries subjected to elevated temperatures. The corrosion seen in the area between the tombstone of the strap and the cell wall, primarily lead sulfate builds up and exerts significant stress on the intercell weld. Failure occurs due to cracking and corrosion penetration into the weld. The alloy, grain structure, and toughness of the cast on strap weld all play a part in the life of the weld.

In this invention, the tin content is raised significantly above the normally accepted level for the cast on strap alloys. The elevated tin content has been found to reduce rather than increase the rate of corrosion. In addition to reducing the rate of corrosion, the higher tin contents reduce the thickness of the corrosion product and thus reduce the amount of material which exerts pressure on the weld zone. The higher tin contents also increase the range of pH where the corrosion layer remains stable thus preventing further growth of the corrosion film and restricting the amount of lead sulfate and lead oxide which forms at the inner surface of the tombstone.

The alloy of this invention has been designed to overcome the problems seen in intercell welds operating at elevated temperatures. The alloy reduces the total amount of corrosion which then reduces the stress on the weld. The alloy also imparts additional eutectic liquid than the same alloy without the high tin content which improves the bonding to the grid lugs and improves bonding between the two tombstone posts to form the weld. The alloy also has a uniform fine grain structure which has high ductility and toughness. The grain structure of the cast strap reduces the tendency of the weld to crack.

The alloy may be utilized as a positive grid alloy for lead acid batteries which normally utilize higher antimony content alloys such as golf cart, fork truck, floor scrubber, mining, and other batteries for cycling service. The alloy of the invention gives similar life to cycling batteries with slightly higher capacity, and lower cost when compared to batteries using standard high antimony positive grid alloys.

When used to make battery straps, the alloy of the invention produces a material which has uniform mechanical properties for the first 24 hours. This means that the straps can be processed through the extrusion fusion process at any time during the first day without problems.

### Example 1

A lead alloy containing 3 weight percent antimony, 1 weight percent tin, 0.1 weight percent arsenic, and 0.02 weight percent selenium was cast into plates of about 0.25 inches thick (6mm). The plates were slowly cooled in air to represent the cooling conditions normally encountered by a strap after solidification onto the grid lugs in a cast on strap process. The thickness of the plate approximates the normal thickness of the strap and tombstone. The tensile strength, yield strength, elongation and toughness for the alloy of the invention is shown in Table 1.

**Table 1**

| Aging Time Hours | Tensile Strength N/mm² | Yield Strength N/mm² | Elongation Percent | Toughness YS/TS |
|---|---|---|---|---|
| 1 | 37.9 | 24.0 | 30 | 0.63 |
| 2 | 37.9 | 24.5 | 30 | 0.64 |
| 8 | 37.9 | 24.8 | 29 | 0.65 |
| 24 | 39.3 | 26.2 | 28 | 0.67 |
| 120 | 41.7 | 28.8 | 23 | 0.70 |

As seen in the example in Table 1, the material slowly ages with time. The yield strength increases only slowly during the first 24 hours after casting. The stability of the yield strength during the first 8 hours is important because the ability of the tombstone to deform uniformly during the extrusion part of the strap welding process. The slow rate of change of the mechanical properties with time yields a uniform part which behaves in a consistent manner during the first 8 hours after manufacturing. Battery manufacturers often restrict the time delay between the cast on strap operation and the through the partition welding process to prevent excessive hardening of the strap to prevent welding problems. A battery strap formed of the alloy of the invention avoids this manufacturing limitation.

The elongation is maintained at a relatively high level even after 5 days of aging. Materials with toughness values less than 0.8 are resistant to brittle fracture while those above 0.8 often exhibit brittle failures. The alloy of the invention has a low ratio of yield strength to tensile strength which indicates that the part can deform significantly under stress without reaching the breaking or tensile strength and thus bend without cracking and failure. The slow rate of initial hardening is important to effective battery manufacturing as well as to the ductile performance of the intercell weld in the battery. Ductility is important so that the tombstone metal can be uniformly extruded through the hole in the cell wall without cracking, bulging, or being only partially extruded.

### Example 2

I have discovered that the alloy of the invention can be used as the positive grid in a lead acid battery used for cycling service. Batteries for cycling service generally utilize alloys containing from about 4.5 to 11 weight percent antimony for the positive grids. The grid alloy also usually contains small amounts of tin, arsenic, copper, sulfur, and silver. The antimony content is generally much higher than that utilized for lead acid batteries used for SLI service. Antimony is usually added to the positive grid to provide sufficient mechanical properties to withstand the rigors of repeated deep discharge and recharge regimes. The antimony also serves to permit the recharge of the positive plate after being discharged completely. The antimony dopes the corrosion layer and prevents the formation of high resistance lead sulfate and lead oxides in the corrosion layer when the acid is consumed by the discharge reaction. Normally the antimony content of these grids is 4.5 weight percent or higher.

For example the antimony content of positive grids for lead acid traction batteries used for golf cart service are normally produced from about 5.5 to 6.5 weight percent antimony. Batteries using lower antimony content positive grids such as about 3 weight percent generally produce significantly shorter life and reduced range. The reduced life is due to the formation of non conducting layers of lead sulfate-lead oxide at the grid active material interface which reduces the ability of the positive plate to be recharged.

I have discovered that the alloy of my invention, with its relatively high percentage of tin antimony alloy, can be utilized to produce low antimony alloys which cycle as well as those containing higher contents of antimony. A lead alloy of 3.0 weight percent antimony containing 1 weight percent tin, 0.1 weight percent arsenic and 0.02 weight percent selenium was cast into the normal positive grids utilized for golf cart batteries. The grids were 6 inches (152.4mm) high, 6.125 inches (155.6mm) wide and 0.080 inches (2.0mm) thick. The low antimony grids were pasted into plates along with the normal positive grid alloy consisting of 5.6 weight percent antimony, 0.3 weight percent tin, 0.2 weight percent arsenic, and 0.022 weight percent selenium. Both sets of grids were pasted using the same paste mix, cured, assembled, and formed in an identical manner. The batteries were tested in a regime of discharge at 25A to 10.5V, recharge at 25 A at 15.5V for 10 hours.

The batteries had an initial capacity of 150 Ah. The capacity gradually rose in both batteries to about 175 Ah where it remained through about 175 cycles. The capacity slowly decreased to about 170Ah at about 200 cycles. At that point one would have expected the battery produced from the alloy of the invention to continue to decrease to a premature life. Both batteries, however remained at a capacity of about 170Ah through 650 cycles. The capacity of both batteries declined slowly until it reached about 100Ah at 900 cycles.

The batteries utilizing the alloy of the invention at all times exceeded the capacity of the batteries using the standard golf cart battery alloy. The battery using grids of the alloy of the invention generally had a capacity of about 5 to 10 ampere hours higher than that of the battery using the standard grid alloy. The life was the same as that of the standard battery.

The grid produced from the alloy of the invention had a very uniform grain structure and corrodes at a significantly slower rate than that produced from the standard higher antimony alloy. The lower corrosion rate enables the grid to better retain the active material and conduct current particularly later in the battery life.

## Claims

1. A lead alloy containing 2.0 to 3.5 weight percent antimony, 0.6 to 2.5 weight percent tin, 0.005 to 0.4 weight percent arsenic, and 0.01 to 0.04 weight percent selenium.

2. The alloy of claim 1 containing 2.5 to 3.5 weight percent antimony, 0.8 to 1.5 weight percent tin, 0.05 to 0.3 weight percent arsenic and 0.01 to 0.03 weight percent selenium.

3. The alloy of claim 1 containing 2.75 to 3.25 weight percent antimony, 0.8 to 1.5 weight percent tin, 0.10 to 0.15 weight percent arsenic and 0.015 to 0.025 weight percent selenium.

4. The alloy of claim 1 containing 0.8 to 1.5 weight percent tin, 0.005 to 0.025 weight percent arsenic and 0.015 to 0.03 weight percent selenium.

5. A battery grid formed from the alloy of claim 1.

6. A battery grid formed from the alloy of claim 4.

7. A battery strap formed from the alloy of claim 1.

8. A battery strap formed from the alloy of claim 2.

9. The battery strap of claim 7 that is a cast on strap.

10. A battery containing components made from the alloy of claim 1.
